# EUROPÄISCHE PATENTSCHRIFT

(11) **EP 4 272 852 B1**
(45) Veröffentlichungstag und Bekanntmachung des Hinweises auf die Patenterteilung: **08.04.2026**
(21) Anmeldenummer: 23171065.8
(22) Anmeldetag: 02.05.2023
(51) Int. Cl.: B01D 33/23, B01D 33/80

(54) **FILTERMODUL FÜR EINEN ROTATIONSSCHEIBENFILTER SOWIE ROTATIONSSCHEIBENFILTER**
FILTER MODULE FOR A ROTARY DISC FILTER AND ROTARY DISC FILTER
MODULE FILTRANT POUR UN FILTRE À DISQUE ROTATIF ET FILTRE À DISQUE ROTATIF

(30) Priorität: 03.05.2022 DE 102022110830
(43) Veröffentlichungstag der Anmeldung: 08.11.2023
(73) Patentinhaber: Huber SE, 92334 Berching (DE)
(72) Erfinder: Kerl, Thomas, 92360 Mühlhausen (DE); Regnat, Winfried, 92334 Berching (DE)
(74) Vertreter: Canzler & Bergmeier Patentanwälte Partnerschaft mbB

(56) Entgegenhaltungen:
- GB-A- 836 086
- GB-A- 861 751
- US-A- 4 865 732

## Beschreibung

Die vorliegende Offenbarung betrifft einen nicht beanspruchten Filterbeutel für einen Rotationsscheibenfilter, der dem Filtern von Abwasser dient, wobei der Filterbeutel einen Filterstoff mit einer Montageöffnung aufweist, über die der Filterbeutel während eines Montageschritts über einen Tragrahmen des Rotationsscheibenfilters gestülpt werden kann, um ein Filtermodul zu bilden, wobei der Filterstoff eine, vorzugsweise der Montageöffnung gegenüberliegende, Austrittsöffnung aufweist, die im bestimmungsgemäßen Gebrauch des Filterbeutels dem Austritt von Filtrat aus dem Inneren des Filtermoduls in ein Zentrumsrohr des Rotationsscheibenfilters dient, nachdem das Filtermodul mit dem Zentrumsrohr verbunden wurde.

Ferner wird ein Filtermodul für einen Rotationsscheibenfilter beansprucht, wobei das Filtermodul einen Tragrahmen sowie einen den Tragrahmen zumindest abschnittsweise umgebenden Filterbeutel aufweist.

Schließlich betrifft die Erfindung einen Rotationsscheibenfilter mit einem Zentrumsrohr sowie mehreren in Längsrichtung des Zentrumsrohrs benachbart zueinander angeordneten und mit dem Zentrumsrohr verbundenen Filterscheiben, wobei jede Filterscheibe mehrere in Umfangsrichtung des Zentrumsrohrs benachbart zueinander angeordnete Filtermodule umfasst.

Ein gattungsgemäßer Rotationsscheibenfilter ist beispielsweise aus der DE 39 26 962 A1 bekannt. Entsprechende Rotationsscheibenfilter, und das gilt auch für den Rotationsscheibenfilter gemäß vorliegender Erfindung, dienen beispielsweise dem Entfernen von Feststoffen aus Abwässern.

Die GB 836 086 A offenbart eine Vorrichtung zum Spannen von Decksegmenten eines Filtermediums für rotierende Scheibenfilter. Ein Basisteil trägt zwei parallele Aufbauten mit einem verschiebbaren Querträger, der Haken zum Einspannen des Decksegments aufweist. Ferner ist ein Decksegment mit Augenlaschen vorgesehen, das durch ein Spannsystem mit Handverschraubung und durch Vernähen oder Verschnüren der Laschen in gespannter Position gehalten wird.

Die Druckschrift GB 861 751 A offenbart ein Filtersystem, insbesondere für Vakuumfilter, in Scheibenform. Es wird ein Überzug vorgeschlagen, der beidseitig Filtertücher über Öffnungen eines elastischen Rahmens trägt und über den starren Rahmen gestülpt werden kann. Dadurch soll die Montage und der Betrieb erleichtert werden.

Aus der US 4,865,732 A1 ist ein Maschenfilterbeutel bekannt, der über eine Metallstütze passt. Der Beutel besitzt gegenüberliegende Ränder, die sich längs entlang einer Seite vom Boden bis zur Oberseite erstrecken. Ein Seil verläuft vom Boden entlang eines Randes über die Oberseite und entlang des anderen Randes zurück zum Boden.

Prinzipiell umfasst ein Rotationsscheibenfilter ein Behältnis, in dem die einzelnen Filterscheiben benachbart zueinander auf dem Zentrumsrohr angeordnet sind. Das Zentrumsrohr ist mit Hilfe eines Antriebs und gemeinsam mit den einzelnen Filterscheiben um seine Längsachse antreibbar. Wird nun das zu reinigende Abwasser in das Behältnis geleitet, so strömt dieses von außen durch die Filterfläche der einzelnen Filtermodule, aus denen die einzelnen Filterscheiben zusammengesetzt sind, ins Innere der Filtermodule und von dort ins Zentrumsrohr. Im Abwasser vorhandene Feststoffe werden hierbei von der Filterfläche der Filtermodule zurückgehalten, wobei der Abscheidungsgrad der Feststoffe von den Eigenschaften der Filterfläche abhängt. Das ins Zentrumsrohr gelangende Filtrat wird schließlich aus dem Rotationsscheibenfilter abgeführt. Ebenso ist es bereits bekannt, die Filterfläche durch ein Filtertuch zu realisieren, welches sackförmig ausgebildet ist und bei der Herstellung des jeweiligen Filtermoduls über einen Tragrahmen desselben gestülpt und anschließend durch Klemmen am Tragrahmen fixiert wird.

Nachteilig bei dieser Lösung ist, dass das Filtertuch während des Betriebs des Rotationsscheibenfilters gegenüber dem Tragrahmen verrutschen kann, so dass im ungünstigsten Fall Abwasser an der Filterfläche vorbei ins Innere der Filtermodule gelangt und letztendlich das bereits gewonnene Filtrat verschmutzt.

Aufgabe der vorliegenden Erfindung ist es, den beschriebenen Stand der Technik weiterzubilden.

Die Aufgabe wird gelöst durch ein Filtermodul sowie einen Rotationsscheibenfilter mit den Merkmalen der unabhängigen Patentansprüche.

Zunächst betrifft die Offenbarung einen nicht beanspruchten Filterbeutel für einen Rotationsscheibenfilter, der dem Filtern von Abwasser dient, wobei der Filterbeutel einen Filterstoff mit einer Montageöffnung aufweist, über die der Filterbeutel während eines Montageschritts über einen Tragrahmen des Rotationsscheibenfilters gestülpt werden kann. Bei der Montageöffnung handelt es sich um einen Schlitz oder eine sonstige Unterbrechung des Filterstoffs, dessen Dimensionen derart bemessen sind, dass der Tragrahmen über die Montageöffnung ins Innere des Filterbeutels eingeschoben werden kann (alternativ kann auch der Filterbeutel über den Tragrahmen gezogen werden). Nach dem Aufziehen des Filterbeutels auf den Tragrahmen, welcher vorzugsweise aus Kunststoff gefertigt ist, bzw. nach dem Hineinschieben des Tragrahmens in den Filterbeutel, weist der Filterbeutel in etwa die Form des Tragrahmens auf, wobei dieser wiederum vorzugsweise eine trapezförmige Grundform aufweist. Die einzelnen Seiten der Trapezform müssen nicht zwangsläufig geradlinig ausgebildet sein. Beispielsweise ist es auch denkbar, dass die im bestimmungsgemäßen Gebrauch der Filtermodule (Tragrahmen mit übergezogenem Filterbeutel) an einem Zentrumsrohr eines Rotationsscheibenfilters anliegende Seite und/oder die bezüglich des Zentrumsrohrs außenliegende Seite eine Kreisbogenform aufweist.

Der Filterstoff umfasst ferner eine oder mehrere, vorzugsweise der Montageöffnung gegenüberliegende, Austrittsöffnungen, die im bestimmungsgemäßen Gebrauch des Filterbeutels dem Austritt von Filtrat aus dem Inneren des Filtermoduls in ein Zentrumsrohr des Rotationsscheibenfilters dient, nachdem das Filtermodul mit dem Zentrumsrohr verbunden wurde. Beim Betrieb des Rotationsscheibenfilters strömt also Abwasser von außen über den Filterbeutel ins Innere des jeweiligen Filtermoduls, wobei Feststoffe bis zu einer gewissen Größe von dem Filterbeutel zurückgehalten werden.

Würde nun der Filterbeutel lediglich über den Tragrahmen gezogen und das resultierende Filtermodul mit einem Zentrumsrohr eines Rotationsscheibenfilters verbunden, so bestünde die Gefahr, dass der Filterbeutel gegenüber dem Tragrahmen verrutscht. Zwar wurde bereits vorgeschlagen, den Filterbeutel an ausgewählten Stellen gegenüber dem Tragrahmen durch Klemmen zu fixieren. Bei dem Filterbeutel handelt es sich jedoch in der Regel um ein stoffartiges Material, welches keine oder nur eine sehr geringe Eigenstabilität aufweist. Wirken nun durch die Drehung der einzelnen Filterscheiben des Rotationsscheibenfilters (welche jeweils mehrere um ein Zentrumsrohr verteilt angeordnete Filtermodule umfassen) Kräfte auf den Filterbeutel, so besteht die Gefahr, dass der Filterbeutel während des Betriebs des Rotationsscheibenfilters gegenüber dem Tragrahmen verrutscht. Um dies zu verhindern, wird nun vorgeschlagen, dass im Bereich eines die Montageöffnung begrenzenden Randes eine Verstärkung angeordnet ist, die der Fixierung des Filterbeutels am Tragrahmen dient.

Bei der Verstärkung handelt es sich um einen Abschnitt des die Verstärkung umfassenden Filterbeutels, der sich hinsichtlich seines Materials, seiner Materialstärke (insbesondere seiner Dicke), seiner Materialzusammensetzung oder sonstiger Eigenschaften von dem restlichen Filterbeutel unterscheidet. Beispielsweise wäre es denkbar, dass der Filterbeutel im Bereich des genannten Randes eine höhere Materialstärke als der Großteil des übrigen Filterbeutels aufweist. Durch die höhere Materialstärke kann der Filterbeutel in diesem Bereich zuverlässiger fixiert werden, wobei die Fixierung beispielsweise durch Klemmung des Randes zwischen einem ersten Abschnitt des Tragrahmens und einen bezüglich des Randes gegenüberliegenden weiteren Abschnitts des Tragrahmens erfolgen kann, wobei der weitere Abschnitt auch durch eine separate Klemmleiste (wie nachfolgend beschrieben) gebildet werden kann.

Beispielsweise wäre es denkbar, dass der Filterbeutel im Bereich seines Randes bei der Herstellung desselben mehrfach umgeschlagen und anschließend vernäht wird, so dass ein verstärkter Rand entsteht. Auch ist es denkbar, wie im Übrigen noch näher beschrieben, dass ein oder mehrere Elemente im Bereich des Randes mit dem Filterbeutel verbunden oder durch diesen fixiert oder umhüllt sind, wobei das oder die Elemente als Verstärkung wirken und eine zuverlässige Fixierung des Filterbeutels gegenüber dem Tragrahmen sicherstellen.

Der Filterbeutel umfasst also einen sack- bzw. schlauchartigen Filterstoff, in den über eine Montageöffnung ein Tragrahmen eingeschoben werden kann. Im Bereich der Montageöffnung weist der Filterbeutel eine Eigenschaft (z.B. Materialart oder Materialstärke oder Materialzusammensetzung) auf, die von der Eigenschaft im Bereich der eigentlichen Filterfläche abweicht. Die Abweichung ist dabei derart gewählt, dass im Bereich des die Montageöffnung umgebenden Randes ein Bereich entsteht, welcher gegenüber dem später vom Abwasser durchströmten Bereich der Filterfläche verstärkt ausgebildet ist.

Des Weiteren ist es vorteilhaft, wenn der Filterstoff als Polstoff ausgebildet ist. Ein Polstoff ist ein Gewebe, bei dem auf einem vorzugsweise textilen Grundgewebe Polfäden fest eingebunden sind, wodurch eine dreidimensionale Struktur entsteht. Die im zu filternden Abwasser mitgeführten Feststoffe werden von diesem Polstoff zurückgehalten, während das gereinigte Wasser in das Innere des jeweiligen Filtermoduls gelangt und über das mit dem Filtermodul verbundene Zentrumsrohr abgeführt werden kann.

Auch ist es von Vorteil, wenn die Montageöffnung im Wesentlichen schlitzförmig ausgebildet ist. Schlitzförmig bedeutet im vorliegenden Fall, dass die MontageÖffnung eine Form aufweist, deren Länge einen Betrag aufweist, der wenigstens dem doppelten, vorzugsweise dem dreifachen, Betrag der senkrecht zur Länge verlaufenden Breite der Montageöffnung entspricht. Insbesondere sollte die Montageöffnung eine Form und entsprechende Abmessungen aufweisen, die es erlaubt, den Tragrahmen während der Montage des den Filterbeutel aufweisenden Filtermoduls vollständig ins Innere des Filterbeutels zu verbringen. Vorzugsweise umgibt die Verstärkung die Montageöffnung vollständig bzw. zu wenigstens 70 %, vorzugsweise zu wenigstens 80 %.

Ebenso bringt es Vorteile mit sich, wenn die Verstärkung durch zumindest ein längliches, vorzugsweise kabelförmiges, Profil, beispielsweise einen Draht, gebildet ist, wobei die Verstärkung insbesondere aus Metall und/oder Kunststoff besteht. Der Filterbeutel umfasst vorzugsweise im Bereich der Verstärkung einen schlauchförmigen Abschnitt, in dem die Verstärkung eingebracht ist. Beispielsweise kann der schlauchförmige Abschnitt dadurch hergestellt worden sein, dass der Filterstoff im Bereich des die Montageöffnung begrenzenden Randes während der Herstellung des Filterbeutels umgeschlagen und entsprechend vernäht wurde. Ebenso ist es denkbar, dass die Verstärkung direkt in den Filterstoff eingewebt oder mit dem Filterstoff verklebt ist.

Vorteilhaft ist es zudem, wenn die Verstärkung mit Hilfe einer oder mehrerer Nähte mit dem Filterstoff verbunden ist. Die Verstärkung ist vorzugsweise von dem Filterstoff umgeben, wobei die Naht bzw. die Nähte die Verstärkung durchdringen oder lediglich umgeben.

Vorteile bringt es zudem mit sich, wenn die Verstärkung von dem Filterstoff zumindest teilweise, beispielsweise durch einen schlauchartigen Abschnitt des Filterbeutels, insbesondere einen schlauchartigen Abschnitt des Filterstoffs, ummantelt ist. Der schlauchartige Abschnitt des Filterstoffs kann durch Umschlagen desselben hergestellt sein. Auch kann der Filterstoff mit einem zusätzlichen Abschnitt verbunden sein, der den schlauchartigen Abschnitt bildet und Teil des Filterbeutels ist.

Vorteilhaft ist es zudem, wenn der Filterbeutel im Bereich der Austrittsöffnung eine Dichtung aufweist, über die er bei bestimmungsgemäßen Gebrauch an einem Zentrumsrohr des Rotationsscheibenfilters dichtend anliegt. Wie bereits oben beschrieben, wird der Filterbeutel während eines Montageschritts über einen Tragrahmen gestülpt, um so ein Filtermodul zu bilden. Das Filtermodul wird schließlich mit einem Zentrumsrohr eines Rotationsscheibenfilters verbunden, d.h. es gibt eine Verbindungsfläche zwischen dem Filtermodul und dem Zentrumsrohr. Um zu vermeiden, dass ungefiltertes Abwasser in diesem Bereich in das Zentrumsrohr eintritt, ist es von Vorteil, wenn die genannte Dichtung vorhanden ist. Hierbei kann es sich beispielsweise um ein Gummiprofil handeln, das die Austrittsöffnung im Bereich einer Außenseite des Filterbeutels umgibt und mit dem Filterstoff verklebt oder vernäht ist.

Die Erfindung betrifft ein Filtermodul für einen Rotationsscheibenfilter, wobei das Filtermodul einen Tragrahmen sowie einen den Tragrahmen zumindest abschnittsweise umgebenden Filterbeutel aufweist. Erfindungsgemäß ist vorgesehen, dass der Filterbeutel einen Filterstoff mit einer Montageöffnung aufweist, über die der Filterbeutel während eines Montageschritts über den Tragrahmen des Rotationsscheibenfilters gestülpt werden kann, um das Filtermodul zu bilden. Des Weiteren weist der Filterstoff zumindest eine der Montageöffnung gegenüberliegende Austrittsöffnung auf, die im bestimmungsgemäßen Gebrauch des Filterbeutels dem Austritt von Filtrat aus dem Inneren des Filtermoduls in ein Zentrumsrohr des Rotationsscheibenfilters dient, nachdem das Filtermodul mit dem Zentrumsrohr verbunden wurde. Im Bereich eines die Montageöffnung begrenzenden Randes ist eine Verstärkung angeordnet, die der Fixierung des Filterbeutels am Tragrahmen dient. Der Tragrahmen weist vorzugsweise eine im Wesentlichen trapezförmige Form auf, wobei eine oder mehrere Seiten der Trapezform auch gekrümmt, vorzugsweise kreisbogenförmig, ausgebildet sein können. Der Filterbeutel umgibt den Tragrahmen nahezu komplett bzw. vollständig. Ferner umfasst der Tragrahmen einen oder mehrere Hohlräume, in die Filtrat beim Betrieb des Rotationsscheibenfilters von außen nach innen einströmen kann. Ferner umfasst der Tragrahmen zumindest eine Öffnung, über die das eingeströmte Filtrat in ein Zentrumsrohr des Rotationsscheibenfilters gelangen kann, mit dem das Filtermodul beim bestimmungsgemäßen Gebrauch verbunden ist.

Das Filtermodul umfasst eine Klemmleiste (vorzugsweise aus Kunststoff), mit deren Hilfe der Filterbeutel im Bereich seiner Montageöffnung gegen den Tragrahmen gepresst und durch die hierdurch hervorgerufene Klemmwirkung am Tragrahmen fixiert ist.

Insbesondere ist es vorteilhaft, wenn die Klemmleiste dabei derart ausgebildet ist, dass sie die Montageöffnung vollständig überdeckt und damit verschließt. Dies stellt sicher, dass keine vom Abwasser mitgeführten Feststoffe über die Montageöffnung, d.h. ungefiltert, ins Innere des Filtermoduls eintreten können. Der Filterstoff ist vorzugsweise im Bereich der Montageöffnung um eine Außenkante des Tragrahmens umgeschlagen und überdeckt diese. Zudem befindet sich die Verstärkung des Randes des Filterstoffs zwischen dem Tragrahmen und der Klemmleiste, so dass die Verstärkung durch das Zusammenspiel von Klemmleiste und Tragrahmen geklemmt und damit sicher fixiert ist. Die Klemmleiste ist vorzugsweise mit einer oder mehreren Schrauben mit dem Tragrahmen verbunden. Alternativ ist es auch denkbar, dass sich die Verstärkung benachbart zur Klemmleiste befindet und ein Herausziehen des Filterstoffs aus dem Klemmbereich verhindert.

Ebenso ist es vorteilhaft, wenn der Tragrahmen aus zwei, vorzugsweise spiegelsymmetrischen, Halbschalen zusammengesetzt ist. Beide Halbschalen haben vorzugsweise die oben beschriebene Trapezform (vorzugsweise mit zwei kreisbogenförmigen Grundseiten und zwei geradlinig verlaufenden Schenkeln).

Besonders vorteilhaft ist es, wenn die Klemmleiste Fortsätze, insbesondere in Form von Bolzen, aufweist, die in korrespondierende Aufnahmen beider Halbschalen eingreifen und vorzugsweise den Filterstoff durchdringen. Die Bolzen greifen dabei klammerartig in die Aufnahmen beider Halbschalen ein und bewirken damit eine Verbindung bzw. räumliche Ausrichtung beider Halbschalen. Die beiden Halbschalen können beispielsweise zusätzlich miteinander verschraubt, verklebt oder durch Verrastungen formschlüssig miteinander verbunden werden. Auch ist es vorteilhaft, wenn die beiden Halbschalen Abstandsbolzen aufweisen, welche die Halbschalen nach ihrer Verbindung auf Abstand halten, so dass ein innenliegender Hohlraum vorhanden ist, in den das Filtrat während des bestimmungsgemäßen Gebrauchs des Filtermoduls einströmen kann. Durch das Zusammenspiel der Bolzen und Aufnahmen wird schließlich sichergestellt, dass die beiden Halbschalen korrekt zueinander platziert bleiben.

Besondere Vorteile bringt es mit sich, wenn der Tragrahmen und/oder die Klemmleiste eine unebene Oberfläche, vorzugsweise eine Riffelung aufweist, die mit dem Filterbeutel in Kontakt steht, um die Klemmwirkung der Klemmleiste im Vergleich zu einer ebenen Oberfläche zu verstärken. In fertig montiertem Zustand des Filtermoduls befindet sich die unebene Oberfläche in Kontakt mit der Verstärkung bzw. dem die Verstärkung umgebenden Material des Filterbeutels.

Ebenso ist es denkbar, dass sich die unebene Oberfläche zwischen der Verstärkung und dem die eigentliche Filterfläche des Filtermoduls bildenden Abschnitt des Filterbeutels befindet. Die Verstärkung müsste also zunächst die unebene Oberfläche passieren, bevor sie außer Eingriff mit der Klemmleiste gerät. Ein versehentliches Lösen des Filterbeutels ist damit nahezu ausgeschlossen.

Vorteilhaft ist es, wenn der Tragrahmen eine Vielzahl von wabenförmigen Durchbrechungen aufweist, durch die das den Filterstoff passierende Filtrat ins Innere des Filtermoduls strömen kann. Denkbar sind selbstverständlich auch einzelne Bohrungen oder Schlitze, welche den gewünschten Filtratfluss ermöglichen.

Des Weiteren ist es vorteilhaft, wenn der Tragrahmen Haltefortsätze, insbesondere in Form von Haken, aufweist, die in Löcher oder Laschen des Filterbeutels eingreifen oder diese durchgreifen. Die Löcher oder Laschen befinden sich vorzugsweise im Bereich des die Montageöffnung umgebenden Randes bzw. maximal 1 cm bis 5 cm von diesem entfernt. Wird nun der Tragrahmen in den Filterbeutel eingebracht, so durchgreifen die Haltefortsätze die entsprechenden Löcher oder Laschen. Hierdurch erfolgt bereits eine Fixierung bzw. Ausrichtung des Filterbeutels gegenüber dem Tragrahmen, so dass die spätere Fixierung mit der Klemmleiste vereinfacht wird. Zusätzlich oder alternativ ist es von Vorteil, wenn eine oder mehrere Löcher oder Laschen auch im Bereich der Austrittsöffnung(en) des Filterbeutels vorhanden sind. In diesem Fall sollte der Tragrahmen in dem Bereich, in dem sich nach dem Einschieben des Tragrahmens in den Filterbeutel die zuletzt genannten Löcher oder Laschen befinden, entsprechende Haltefortsätze aufweisen. Das Zusammenspiel von Haltefortsätzen mit den Löchern oder Laschen stellt sicher, dass der Filterbeutel im Bereich der Austrittsöffnung nicht verrutscht, bevor das Filtermodul mit dem Zentrumsrohr verbunden wird. Vorzugsweise wird der Filterbeutel nach dem Verbinden mit dem Zentrumsrohr zwischen dem Zentrumsrohr und dem Tragrahmen klemmend gehalten.

Der erfindungsgemäße Rotationsscheibenfilter umfasst ein mit Hilfe eines Antriebs angetriebenes Zentrumsrohr sowie mehreren in Längsrichtung des Zentrumsrohrs benachbart zueinander angeordneten und mit dem Zentrumsrohr verbundenen Filterscheiben, wobei jede Filterscheibe mehrere in Umfangsrichtung des Zentrumsrohrs benachbart zueinander angeordnete Filtermodule umfasst. Erfindungsgemäß ist vorgesehen, dass die Filtermodule gemäß bisheriger und/oder nachfolgende Beschreibung ausgebildet sind. Vorzugsweise umfassen die einzelnen Filtermodule eine das jeweilige Filtermodul in radialer Richtung der Filterscheiben durchdringende Stange, welche mit dem Zentrumsrohr verbunden ist. Auf der gegenüberliegenden Seite des Zentrumsrohrs durchdringt die Stange ebenfalls das Filtermodul. Mit Hilfe einer Mutter wird das Filtermodul schließlich gegen das Zentrumsrohr gezogen und damit gegenüber demselben fixiert.

Vorteile bringt es zudem mit sich, wenn das Zentrumsrohr Öffnungen aufweist, über die das Filtrat von den Filtermodulen ins Innere des Zentrumsrohrs abfließen kann, wobei jedes Filtermodul Haltefortsätze aufweist, die jeweils in die dem Filtermodul zugeordnete Öffnung ragen und ein Verrutschen des Filtermoduls gegenüber dem Zentrumsrohr verhindern. Die Filtermodule werden damit im Bereich des Zentrumsrohrs formschlüssig fixiert.

Weitere Vorteile der Erfindung sind in den nachfolgenden Ausführungsbeispielen beschrieben. Es zeigen, jeweils schematisch:
- **Figur 1**: auf einem Zentrumsrohr montierte Filtermodule,
- **Figur 2**: einen Tragrahmen sowie eine Klemmleiste eines erfindungsgemäßen Filtermoduls,
- **Figur 3**: einen Filterbeutel,
- **Figur 4a**: ein erfindungsgemäßes Filtermodul vor Montage der Klemmleiste,
- **Figur 4b**: ein erfindungsgemäßes Filtermodul nach Montage der Klemmleiste,
- **Figur 5**: eine Schnittdarstellung eines erfindungsgemäßen Filtermoduls im Bereich der Klemmleiste, und
- **Figur 6**: ein erfindungsgemäßes Filtermodul betrachtet von der Seite, welche nach der Montage mit dem Zentrumsrohr in Verbindung steht.

**In** den nachfolgenden Figuren sind gleichartige Elemente bzw. Bauteile gleich dargestellt und daher teilweise nur eines von mehreren gleichartigen Elementen bzw. Bauteilen mit einem Bezugszeichen versehen, um eine möglichst gute Übersicht zu gewährleisten.

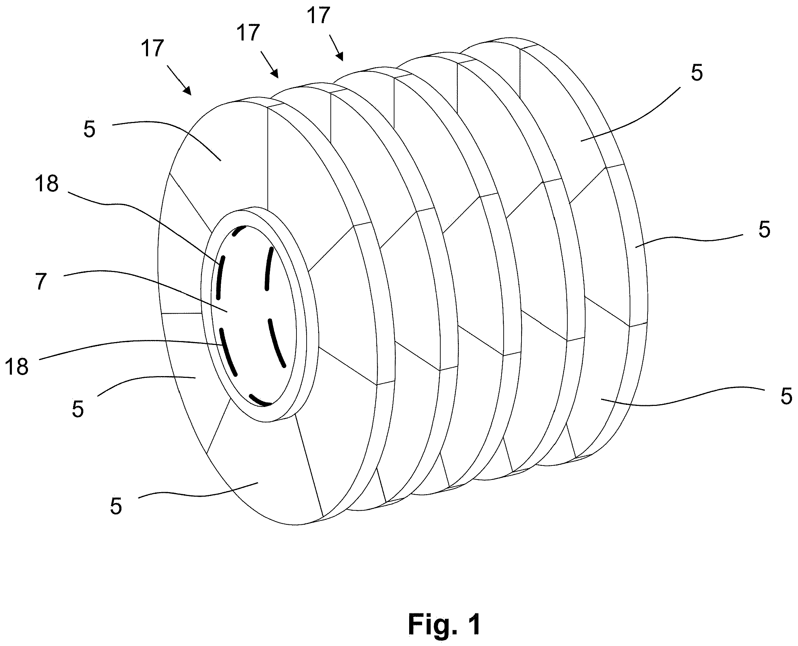

Figur 1 zeigt ein Zentrumsrohr 7 eines Rotationsscheibenfilters mit mehreren an dem Zentrumsrohr 7 befestigten Filtermodulen 5. Mehrere der Filtermodule 5 bilden jeweils eine Filterscheibe 17. Die gezeigten Bauteile befinden sich im bestimmungsgemäßen Gebrauch in einem (nicht gezeigten) geschlossenen Behältnis, welches der Aufnahme von zu filterndem Abwasser dient. Das Abwasser durchströmt die Filterscheiben 17 von außen nach innen, wobei Feststoffe bis zu einer bestimmten und von der Art des im Folgenden noch beschriebenen Filterbeutels 1 abhängigen Partikelgröße zurückgehalten werden. Das die Filterbeutel 1 passierende Filtrat gelangt schließlich über Öffnungen 18 im Zentrumsrohr 7 ins Innere desselben und kann über einen nicht gezeigten Filtratablauf aus dem Rotationsscheibenfilter abgeführt werden.

Im Folgenden wird der Aufbau der einzelnen Filtermodule 5 näher beschrieben.

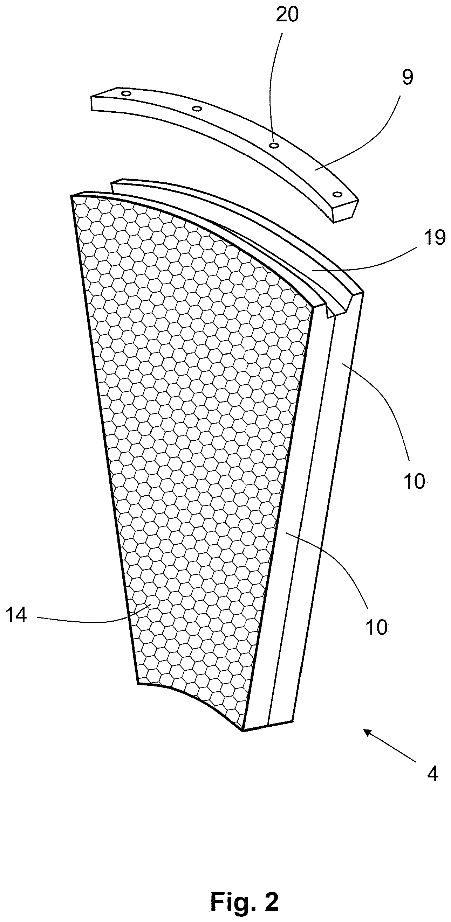

Jedes der Filtermodule 5 weist einen im bestimmungsgemäßen Gebrauch innenliegenden Tragrahmen 4 auf, der vorzugsweise zwei miteinander verbundene Halbschalen 10 umfasst. Die Halbschalen 10 weisen wiederum einzelne, beispielsweise wabenförmige, Durchbrechungen 14 auf (siehe Figur 2), über die Filtrat von außen ins Innere des Tragrahmens 4 und schließlich über eine Auslassöffnung desselben ins Innere des Zentrumsrohrs 7 strömen kann.

Ferner umfasst das Filtermodul 5 eine Klemmleiste 9 zum Fixieren eines Filterbeutels 1, die in der Ansicht von Figur 2 noch nicht mit dem Tragrahmen 4 verbunden ist. Wie Figur 2 zu entnehmen ist, umfasst der Tragrahmen 4 eine Nut 19, die im Wesentlichen der Negativform der Klemmleiste 9 entspricht.

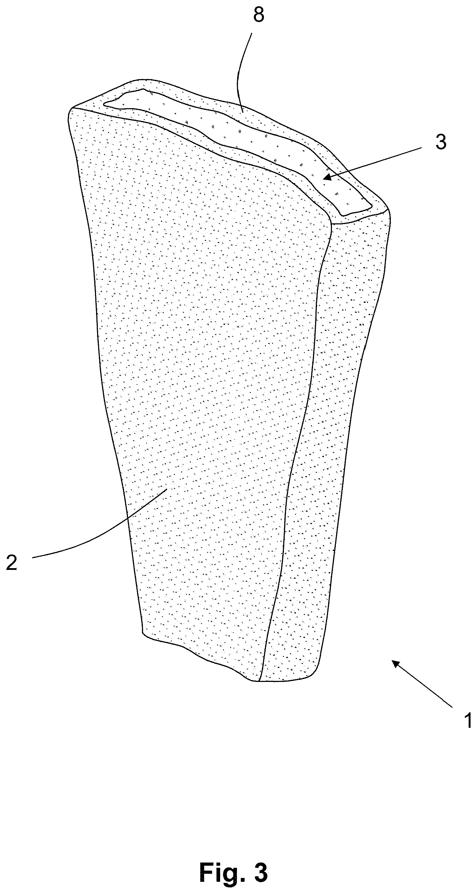

Figur 3 zeigt einen Filterbeutel 1. Dieser besteht im Wesentlichen aus einem Filterstoff 2 mit einer definierten Maschenweite, so dass Feststoffe, die von einem zu filternden Abwasser mitgeführt werden, ab einer gewissen Partikelgröße von dem Filterstoff 2 zurückgehalten werden. Der Filterbeutel 1 weist im Wesentlichen eine Form auf, die der Form des Tragrahmens 4 entspricht.

Ferner ist eine Montageöffnung 3 vorgesehen, in die der Tragrahmen 4 (bezogen auf Figur 3 von oben) in den Filterbeutel 1 eingeschoben werden kann (selbstverständlich kann auch der Filterbeutel 1 über den Tragrahmen 4 gezogen werden). Die Montageöffnung 3 weist also einen Querschnitt auf, der groß genug bemessen ist, dass der Tragrahmen 4 innerhalb des Filterbeutels 1 positioniert werden kann. Vorzugsweise ist der Filterstoff 2 als Polstoff ausgebildet.

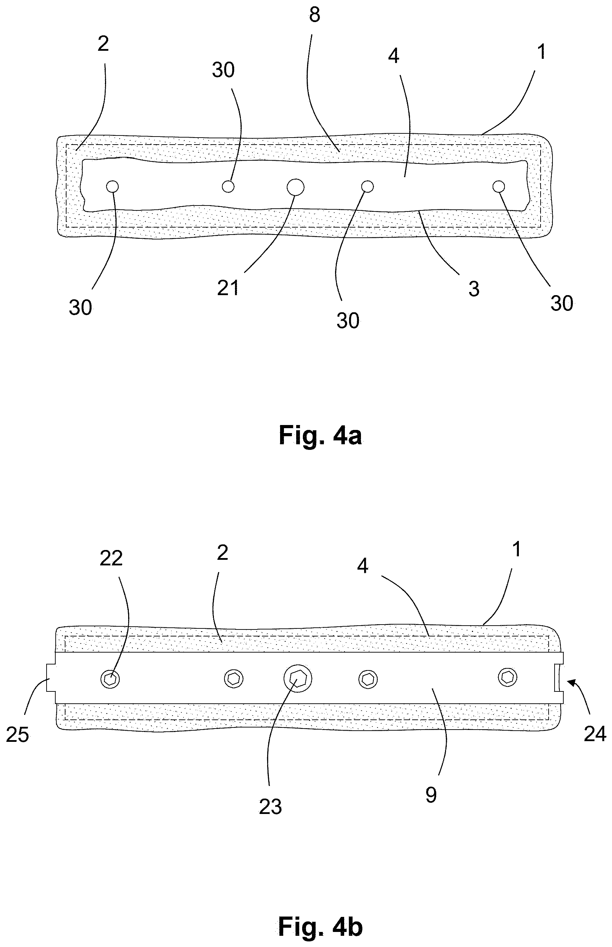

In Figur 4a ist ein Tragrahmen 4 von oben (d.h. von der dem Zentrumsrohr 7 abgewandten Seite) und ohne Klemmleiste 9 dargestellt, nachdem der Filterbeutel 1 über den Tragrahmen 4 gezogen bzw. der Tragrahmen 4 in den Filterbeutel 1 gesteckt worden ist. Der Filterstoff 2 ist dabei entweder flexibel genug, dass der Tragrahmen 4 durch die Montageöffnung 3 bewegt werden kann. Ebenso ist es denkbar, dass der Filterbeutel 1 im Bereich der Montageöffnung 3 einzelne Einschnitte aufweist (nicht gezeigt), so dass das genannte Einschieben ermöglicht wird.

Nachdem der Filterbeutel 1 und der Tragrahmen 4 entsprechend Figur 4a ausgerichtet sind, wird die Klemmleiste 9 mit dem Tragrahmen 4 verbunden, wobei dies beispielsweise mit Hilfe von Schrauben 22 erfolgen kann, die durch Bohrungen 20 (siehe Figur 2) gesteckt und z.B. in entsprechende Gewinde 30 des Tragrahmens 4 (siehe Figur 4a) geschraubt werden.

Ferner zeigen die Figuren 4a und 4b, dass der Tragrahmen 4 eine Zentrumsbohrung 21 aufweisen kann. Gleiches gilt für die Klemmleiste 9, wobei diese in Figur 4b aufgrund der Zentrumsschraube 23 nicht zu sehen ist. Die Zentrumsschraube 23 erstreckt sich vorzugsweise durch das gesamte Filtermodul 5 und ist schließlich mit dem Zentrumsrohr 7 verbunden, so dass das Filtermodul 5 über die Zentrumsschraube 23 an dem Zentrumsrohr 7 fixiert ist.

Figur 4b zeigt darüber hinaus, dass es von Vorteil sein kann, wenn die Klemmleiste 9 eine Ausbuchtung 25 sowie eine korrespondierende Vertiefung 24 aufweist. Werden nun mehrere derartige Filtermodule 5 in Umfangsrichtung um ein Zentrumsrohr 7 montiert, um eine Filterscheibe 17 zu bilden, so greift jeweils eine Ausbuchtung 25 eines Filtermoduls 5 in die korrespondierende Vertiefung 24 des benachbarten Filtermoduls 5. Die so gebildete Filterscheibe 17 weist im Ergebnis eine hohe mechanische Stabilität auf.

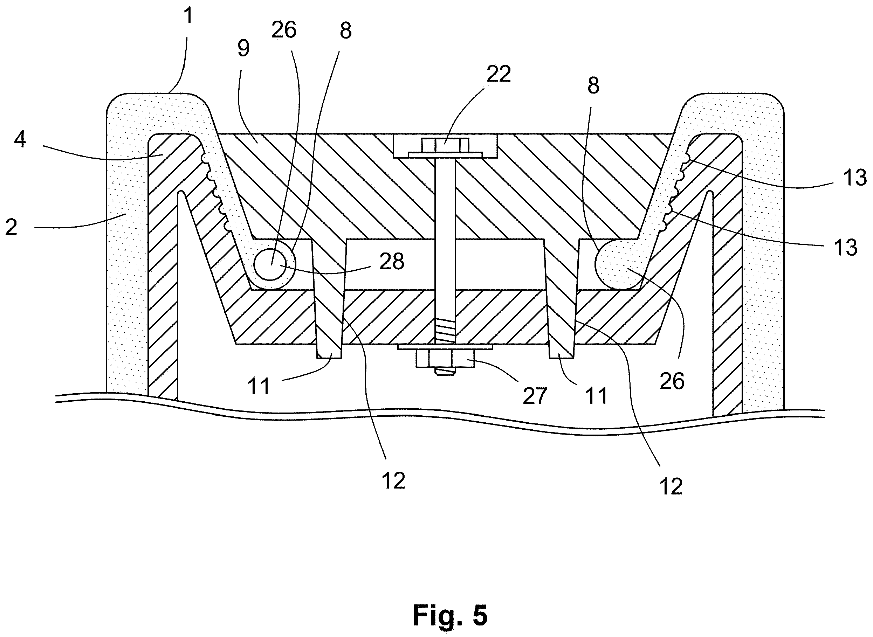

In Figur 5 ist ein Querschnitt eines erfindungsgemäßen Filtermoduls 5 in dem dem Zentrumsrohr 7 abgewandten Bereich dargestellt. Die Schnittfläche verläuft hierbei bezogen auf Figur 1 in einer Ebene, die durch die die Drehachse des Zentrumsrohrs 7 verläuft und sich radial zu dieser erstreckt.

Gezeigt sind zwei alternative Möglichkeiten, den die Montageöffnung 3 umgebenden Rand 8 des Filterbeutels 1 mit einer Verstärkung 26 zu versehen, welche eine zuverlässige und langlebige Fixierung des Filterbeutels 1 gegenüber dem Tragrahmen 4 sicherstellt. Wie aus Figur 5 ersichtlich ist, weist der Filterbeutel 1 im Bereich seines die Montageöffnung 3 umgebenden Randes 8 auf beiden Seiten (bezogen auf Figur 5) eine Verstärkung 26 auf. Während die Verstärkung 26 auf der rechten Seite durch eine Dickstelle des Filterstoffs 2 selbst gebildet ist, ist auf der linken Seite eine separate Verstärkung 26 in Form eines Drahtes 28 vorhanden. Vorzugsweise erstreckt sich die Verstärkung 26 über den gesamten, die Montageöffnung 3 umgebenden, Rand 8. Alternativ ist es auch möglich, dass die Verstärkung 26 nur in dem Bereich des Randes 8 vorhanden ist, der sich in Längsrichtung der Klemmleiste 9 erstreckt.

Um die Stärke der Fixierung des Filterbeutels 1 weiter zu erhöhen, können einzelne Riffelungen 13 im Bereich des Tragrahmens 4 vorhanden sein. Hierdurch wird die Haftreibung zwischen Filterbeutel 1 und Tragrahmen 4 verstärkt.

Ferner ist es denkbar und ebenfalls in Figur 5 dargestellt, dass die Klemmleiste 9 mehrere Bolzen 11 aufweist, die sich in korrespondierende Aufnahmen 12 des Tragrahmens 4 erstrecken. Insbesondere wenn der Tragrahmen 4 aus zwei Halbschalen 10 zusammengesetzt ist, stellen diese Bolzen 11 sicher, dass die Halbschalen 10 stets korrekt zueinander ausgerichtet sind.

Die Klemmleiste 9 wird mit Hilfe mehrerer Schrauben 22 und korrespondieren Muttern 27 an dem Tragrahmen 4 fixiert bzw. gegen den Tragrahmen 4 gezogen, so dass der Filterbeutel 1 zuverlässig gegen den Tragrahmen 4 gepresst und durch die resultierende Klemmwirkung fixiert ist.

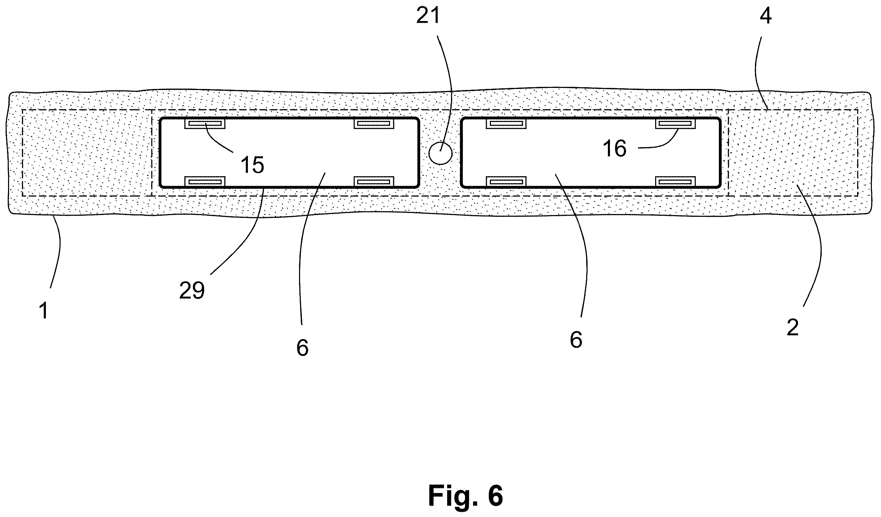

Abschließend ist in Figur 6 der Bereich gezeigt, über den das Filtermodul 5 an dem Zentrumsrohr 7 anliegt. Um eine zuverlässige Abdichtung des Filtermoduls 5 gegenüber dem Zentrumsrohr 7 sicherzustellen, weist der Filterbeutel 1 vorzugsweise eine oder mehrere Dichtungen 29 auf. Die Dichtungen 29 umgeben in Figur 6 jeweils eine Austrittsöffnung 6, über die das Filtrat aus dem Inneren des Filtermoduls 5 in das Zentrumsrohr 7 strömen kann. Zwischen den beiden Austrittsöffnungen 6 ist auch in Figur 6 die Zentrumsbohrung 21 zu sehen, durch welche die nicht dargestellte Zentrumsschraube 23 gesteckt und mit dem Zentrumsrohr 7 verbunden werden kann.

Schließlich weist der Filterbeutel 1 im Fall von Figur 6 mehrere Laschen 16 auf, welche bei der Montage des Filtermoduls 5 über korrespondierende Haltefortsätze 15 des Tragrahmens 4 geschoben werden. Der Filterbeutel 1 wird hierdurch ortsfest gegenüber dem Tragrahmen 4 fixiert, so dass ein Verschieben des Filterbeutels 1 im Bereich der Austrittsöffnungen 6 gegenüber dem Tragrahmen 4 verhindert wird. Bei den Haltefortsätzen 15 handelt es sich um Fortsätze, welche bezogen auf die Blattebene nach oben durch die Laschen 16 ragen, so dass die Laschen 16 in der Blattebene nicht verschoben werden können.

Die vorliegende Erfindung ist nicht auf die dargestellten und beschriebenen Ausführungsbeispiele beschränkt. Abwandlungen im Rahmen der Patentansprüche sind ebenso möglich wie eine beliebige Kombination der beschriebenen Merkmale, auch wenn sie in unterschiedlichen Teilen der Beschreibung bzw. den Ansprüchen oder in unterschiedlichen Ausführungsbeispielen dargestellt und beschrieben sind, vorausgesetzt, dass kein Widerspruch zur Lehre der unabhängigen Ansprüche entsteht.

### Bezugszeichenliste

- 1: Filterbeutel
- 2: Filterstoff
- 3: Montageöffnung
- 4: Tragrahmen
- 5: Filtermodul
- 6: Austrittsöffnung
- 7: Zentrumsrohr
- 8: Rand
- 9: Klemmleiste
- 10: Halbschale
- 11: Bolzen
- 12: Aufnahme
- 13: Riffelung
- 14: wabenförmige Durchbrechung
- 15: Haltefortsatz
- 16: Lasche
- 17: Filterscheibe
- 18: Öffnung
- 19: Nut
- 20: Bohrung
- 21: Zentrumsbohrung
- 22: Schraube
- 23: Zentrumsschraube
- 24: Vertiefung
- 25: Ausbuchtung
- 26: Verstärkung
- 27: Mutter
- 28: Draht
- 29: Dichtung
- 30: Gewinde

## Patentansprüche

1. Filtermodul (5) für einen Rotationsscheibenfilter, wobei das Filtermodul (5) einen Tragrahmen (4) sowie einen den Tragrahmen (4) zumindest abschnittsweise umgebenden Filterbeutel (1) aufweist, wobei der Filterbeutel (1) einen Filterstoff (2) mit einer Montageöffnung (3) aufweist, über die der Filterbeutel (1) während eines Montageschritts über den Tragrahmen (4) des Rotationsscheibenfilters gestülpt werden kann, um das Filtermodul (5) zu bilden, wobei der Filterstoff (2) zumindest eine der Montageöffnung (3) gegenüberliege Austrittsöffnung (6) aufweist, die im bestimmungsgemäßen Gebrauch des Filterbeutels (1) dem Austritt von Filtrat aus dem Inneren des Filtermoduls (5) in ein Zentrumsrohr (7) des Rotationsscheibenfilters dient, nachdem das Filtermodul (5) mit dem Zentrumsrohr (7) verbunden wurde, wobei im Bereich eines die Montageöffnung (3) begrenzenden Randes (8) eine Verstärkung (26) angeordnet ist, die der Fixierung des Filterbeutels (1) am Tragrahmen (4) dient,
**dadurch gekennzeichnet,**
**dass** das Filtermodul (5) eine Klemmleiste (9) umfasst, mit deren Hilfe der Filterbeutel (1) im Bereich seiner Montageöffnung (3) gegen den Tragrahmen (4) gepresst und durch die hierdurch hervorgerufene Klemmwirkung am Tragrahmen (4) fixiert ist.

2. Filtermodul (5) gemäß dem vorangegangenen Anspruch, **dadurch gekennzeichnet, dass** der Tragrahmen (4) aus zwei, vorzugsweise spiegelsymmetrischen, Halbschalen (10) zusammengesetzt ist.

3. Filtermodul (5) gemäß einem der vorangegangenen Ansprüche,
**dadurch gekennzeichnet, dass** die Klemmleiste (9) Fortsätze, insbesondere in Form von Bolzen (11), aufweist, die in korrespondierende Aufnahmen (12) beider Halbschalen (10) eingreifen und vorzugsweise den Filterstoff (2) durchdringen.

4. Filtermodul (5) gemäß einem der vorangegangenen Ansprüche,
**dadurch gekennzeichnet, dass** der Tragrahmen (4) und/oder die Klemmleiste (9) eine unebene Oberfläche, vorzugsweise eine Riffelung (13) aufweist, die mit dem Filterbeutel (1) in Kontakt steht, um die Klemmwirkung der Klemmleiste (9) im Vergleich zu einer ebenen Oberfläche zu verstärken.

5. Filtermodul (5) gemäß einem der vorangegangenen Ansprüche,
**dadurch gekennzeichnet, dass** der Tragrahmen (4) eine Vielzahl von wabenförmigen Durchbrechungen (14) aufweist, durch die das den Filterstoff (2) passierende Filtrat ins Innere des Filtermoduls (5) strömen kann.

6. Filtermodul (5) gemäß einem der vorangegangenen Ansprüche,
**dadurch gekennzeichnet, dass** der Tragrahmen (4) Haltefortsätze (15), insbesondere in Form von Haken, aufweist, die in Löcher oder Laschen (16) des Filterbeutels (1) eingreifen oder diese durchgreifen.

7. Rotationsscheibenfilter mit einem Zentrumsrohr (7) sowie mehreren in Längsrichtung des Zentrumsrohrs (7) benachbart zueinander angeordneten und mit dem Zentrumsrohr (7) verbundenen Filterscheiben (17), wobei jede Filterscheibe (17) mehrere in Umfangsrichtung des Zentrumsrohrs (7) benachbart zueinander angeordnete Filtermodule (5) umfasst, **dadurch gekennzeichnet, dass** die Filtermodule (5) nach einem der vorangegangenen Ansprüche ausgebildet sind.

8. Rotationsscheibenfilter gemäß dem vorangegangenen Anspruch, **dadurch gekennzeichnet, dass** das Zentrumsrohr (7) Öffnungen (18) aufweist, über die das Filtrat von den Filtermodulen (5) ins Innere des Zentrumsrohrs (7) abfließen kann, wobei jedes Filtermodul (5) Haltefortsätze (15) aufweist, die jeweils in die dem Filtermodul (5) zugeordnete Öffnung (18) ragen und ein Verrutschen des Filtermoduls (5) gegenüber dem Zentrumsrohr (7) verhindern.

## Claims

1. Filter module (5) for a rotary disc filter, wherein the filter module (5) has a support frame (4) and a filter bag (1) which surrounds the support frame (4) at least in sections, wherein the filter bag (1) has a filter material (2) with a mounting opening (3), via which the filter bag (1) can be placed over the support frame (4) of the rotary disc filter during a mounting step in order to form the filter module (5), wherein the filter material (2) has at least one outlet opening (6) which lies opposite the mounting opening (3) and which, when the filter bag (1) is used as intended, serves for the outlet of filtrate from the interior of the filter module (5) into a central tube (7) of the rotary disc filter after the filter module (5) has been connected to the central tube (7), wherein
a reinforcement (26) is arranged in the region of an edge (8) which delimits the mounting opening (3) and which serves to fix the filter bag (1) to the support frame (4),
**characterized in that**,
the filter module (5) comprises a clamping bar (9), with the aid of which the filter bag (1) is pressed against the support frame (4) in the region of its mounting opening (3) and is fixed to the support frame (4) by the clamping effect caused thereby.

2. Filter module (5) according to the preceding claim, **characterized in that** the support frame (4) is composed of two, preferably mirror symmetrical, half shells (10).

3. Filter module (5) according to one of the preceding claims, **characterized in that** the clamping bar (9) has extensions, in particular in the form of bolts (11), which engage in corresponding receptions (12) of the two half shells (10) and preferably penetrate the filter material (2).

4. Filter module (5) according to one of the preceding claims, **characterized in that** the support frame (4) and/or the clamping bar (9) has an uneven surface, preferably a ribbing (13), which is in contact with the filter bag (1) in order to reinforce the clamping effect of the clamping bar (9) in comparison with a flat surface.

5. Filter module (5) according to one of the preceding claims, **characterized in that** the support frame (4) has a plurality of honeycomb-shaped openings (14), through which the filtrate passing through the filter material (2) can flow into the interior of the filter module (5).

6. Filter module (5) according to one of the preceding claims, **characterized in that** the support frame (4) has retaining extensions (15), in particular in the form of hooks, which engage in holes or tabs (16) of the filter bag (1) or pass through these.

7. Rotary disc filter having a central tube (7) and multiple filter discs (17) which are arranged adjacent to one another in the longitudinal direction of the central tube (7) and are connected to the central tube (7), wherein each filter disc (17) comprises multiple filter modules (5) which are arranged adjacent to one another in the circumferential direction of the central tube (7), **characterized in that** the filter modules (5) are designed according to one of the preceding claims.

8. Rotary disc filter according to the preceding claim, **characterized in that** the central tube (7) has openings (18), via which the filtrate can flow from the filter modules (5) into the interior of the central tube (7), wherein each filter module (5) has retaining extensions (15) which each project into the opening (18) assigned to the filter module (5) and prevent the filter module (5) from slipping with respect to the central tube (7).

## Revendications

1. Module de filtre (5) pour un filtre à disque rotatif, dans lequel le module de filtre (5) présente un cadre de support (4) ainsi qu'un sac filtrant (1) entourant au moins en partie le cadre de support (4), dans lequel le sac filtrant (1) présente un matériau filtrant (2) avec une ouverture de montage (3), par le biais de laquelle le sac filtrant (1) peut être posé pendant une étape de montage sur le cadre de support (4) du filtre à disque rotatif, afin de former le module de filtre (5), dans lequel le matériau filtrant (2) présente au moins une ouverture de sortie (6) opposée à l'ouverture de montage (3), qui sert, lors de l'utilisation conforme à l'emploi du sac filtrant (1), à la sortie de filtrat de l'intérieur du module de filtre (5) dans un tube central (7) du filtre à disque rotatif, après que le module de filtre (5) a été relié au tube central (7), dans lequel un renforcement (26) est disposé dans la région d'un bord (8) limitant l'ouverture de montage (3), lequel sert à la fixation du sac filtrant (1) au cadre de support (4),
**caractérisé en ce que**
le module de filtre (5) comprend une barre de serrage (9), à l'aide de laquelle le sac filtrant (1) est pressé dans la région de son ouverture de montage (3) contre le cadre de support (4) et est fixé par l'effet de serrage ainsi provoqué au cadre de support (4).

2. Module de filtre (5) selon la revendication précédente, **caractérisé en ce que** le cadre de support (4) est composé de deux demi-coques (10), de préférence à symétrie de miroir.

3. Module de filtre (5) selon l'une quelconque des revendications précédentes, **caractérisé en ce que** la barre de serrage (9) présente des prolongements, en particulier sous la forme de boulons (11), qui viennent en prise dans des réceptions correspondantes (12) des deux demi-coques (10) et traversent de préférence le matériau filtrant (2).

4. Module de filtre (5) selon l'une quelconque des revendications précédentes, **caractérisé en ce que** le cadre de support (4) et/ou la barre de serrage (9) présente une surface non plane, de préférence une cannelure (13), qui est en contact avec le sac filtrant (1), afin de renforcer l'effet de serrage de la barre de serrage (9) par rapport à une surface plane.

5. Module de filtre (5) selon l'une quelconque des revendications précédentes, **caractérisé en ce que** le cadre de support (4) présente une pluralité de perforations en forme de nid d'abeilles (14), à travers lesquelles le filtrat passant à travers le matériau filtrant (2) peut s'écouler à l'intérieur du module de filtre (5).

6. Module de filtre (5) selon l'une quelconque des revendications précédentes, **caractérisé en ce que** le cadre de support (4) présente des prolongements de retenue (15), en particulier sous la forme de crochets, qui viennent en prise dans des trous ou des pattes (16) du sac filtrant (1) ou traversent ceux-ci.

7. Filtre à disque rotatif avec un tube central (7) ainsi que plusieurs disques filtrants (17) disposés les uns à côté des autres dans la direction longitudinale du tube central (7) et reliés au tube central (7), dans lequel chaque disque filtrant (17) comprend plusieurs modules de filtre (5) disposés les uns à côté des autres dans la direction périphérique du tube central (7), **caractérisé en ce que** les modules de filtre (5) sont réalisés selon l'une quelconque des revendications précédentes.

8. Filtre à disque rotatif selon la revendication précédente, **caractérisé en ce que** le tube central (7) présente des ouvertures (18), par le biais desquelles le filtrat peut s'écouler des modules de filtre (5) à l'intérieur du tube central (7), dans lequel chaque module de filtre (5) présente des prolongements de retenue (15), qui font saillie à chaque fois dans l'ouverture (18) associée au module de filtre (5) et empêchent un glissement du module de filtre (5) par rapport au tube central (7).
